# EUROPEAN PATENT APPLICATION

(11) **EP 0 818 276 A2**
(43) Date of publication of application: **14.01.1998**
(21) Application number: 97305084.2
(22) Date of filing: 10.07.1997
(51) Int. Cl.: B25B 27/00, B23P 19/04, B60J 10/00

(54) **Clinching apparatus, and a spindle therefor**

(30) Priority: 12.07.1996 GB 9614721
(71) Applicant: Standard Products Limited, Huntingdon Cambridgeshire PE18 6NU (GB)
(72) Inventor: Harris, David Strachan, Orton Wistow Peterborough PE2 6YT (GB)
(74) Representative: Jones, Michael Raymond

(57) **Abstract**

There is disclosed a spindle for incorporation in a clinching apparatus, comprising:
a first shaft (44) rotatable about its own elongate axis;
a second shaft (46) rotatable about its own elongate axis;
a coupling means (45) which allows the second shaft (46) to be flexibly coupled to the first shaft (44) in a manner such that rotation of the first shaft (44) about its own axis causes rotation of the second shaft (46) about its own axis, and such that the axis of the second shaft can adopt a non-rectilinear relationship with respect to the axis of the first shaft (44); and
an elongate resiliently flexible member (47) capable of acting so as to tend to urge the axes of the first and second shafts (44 and 46) to adopt a rectilinear configuration.

Also disclosed is an apparatus suitable for fitting a seal having a channel-shaped portion onto a flange which can vary in thickness along the length of the flange, which apparatus comprises:
a housing (2, 3 and 4);
two rotatable spindles (10 and 11) carried by the housing (2, 3 and 4), preferably with at least one of the spindles (10 and 11) being a spindle as described above; and
means (41 and 42) within the housing for causing rotation of the spindles;
with provision for the two spindles to move apart in the plane in which they are located.

## Description

This invention relates to a clinching apparatus and to a spindle therefor.

It is well known in the motor industry to use a clinching apparatus in order to fit a sealing strip having a channel-shaped portion securely onto a flange. Generally speaking the channel-shaped portion has a base and two opposing side walls and usually the sealing member contains a metal reinforcing core within the material which defines the channel-shaped portion. Sometimes the opposing walls of the channel-shaped portion are deliberately splayed apart to facilitate the fitting of that portion of the sealing member over the flange, and often there are considerable variations in the thickness of the flange. In practice, once the sealing member is correctly positioned with respect to the flange, a clinching apparatus is used in order to cause relative movement of the opposing walls of the channel-shaped portion of the sealing member towards each other so as to secure the sealing member on the flange. There are numerous different types of apparatus for effecting the clinching. One such known type of apparatus employs a housing from which project two rotatable rigid spindles, there being provision within the housing to cause rotation of the spindles. The clinching apparatus is positioned with the spindles over the exterior of the opposing walls of the channel-shaped portion of the sealing member when the sealing member is correctly positioned on the flange and then actuation of the clinching apparatus causes rotation of the spindles which causes the apparatus to advance along the sealing member, clamping the sealing member to the flange as the clinching apparatus advances. Where the flange has a uniform thickness, i.e. without any variation in thickness along its length, the known style of clinching apparatus can provide good results. However, such a style of apparatus, which has a constant spacing between the rotating rigid spindles, or between any abutment members mounted on the free end regions of the spindles, cannot accommodate large variations in the thickness of the flange to which the sealing member is to be clamped. There are now demands from vehicle manufacturers for sealing members to be clamped to flanges which can have a thickness varying from 0.8 to 5.6 mm along the length around a door aperture, and conventional clinching apparatuses with twin rigid spindles having a fixed centre are less than satisfactory in this respect.

According to a first aspect of the present invention, there is provided a spindle for incorporation in a clinching apparatus, comprising:
a first shaft rotatable about its own elongate axis;
a second shaft rotatable about its own elongate axis;
a coupling means which allows the second shaft to be flexibly coupled to the first shaft in a manner such that rotation of the first shaft about its own axis causes rotation of the second shaft about its own axis, and such that the axis of the second shaft can adopt a non-rectilinear relationship with respect to the axis of the first shaft; and
an elongate resiliently flexible member capable of acting so as to tend to urge the axes of the first and second shafts to adopt a rectilinear configuration.

Preferably, the elongate resiliently flexible member passes through the interior of the coupling means and has (i) a first end region located within a bore in the first shaft, and (ii) a second end region located within a bore within the second shaft.

In such a case, preferably first bearing means are provided between the first end region of the elongate resiliently flexible member and at least part of the wall of the first shaft that defines the bore of the first shaft, and second bearing means are provided between the second end region of the resiliently flexible member and at least part of the wall of the second shaft that defines the bore in the second shaft.

Conveniently the coupling means has a first part and a second part, with the first part being securable to an adjacent end region of the first shaft and with a second part being securable to the adjacent end region of the second shaft, there being provision for pivotal movement between the first and second parts, with rotation of the first part being capable of causing rotation of the second part.

The first and second parts of the coupling means may each have claws which intermesh and are located around a sphere.

Such a sphere can have an aperture through which the resiliently flexible member extends.

The elongate resiliently flexible member can be a rod of chrome vanadium.

According to a second aspect of the present invention, there is provided an apparatus suitable for fitting a seal having a channel-shaped portion onto a flange which can vary in thickness along the length of the flange, which apparatus comprises:
a housing;
two rotatable spindles carried by the housing, with at least one of the spindles being a spindle in accordance with the first aspect; and
means within the housing for causing rotation of the spindles.

Preferably both spindles are as defined in the first-mentioned aspect of the present invention.

Preferably there is provision to allow the spacing between the spindles to increase in a plane in which the spindles lie, whilst preventing flexing of the spindles perpendicular to that plane.

Preferably each spindle is surrounded by a sleeve, the spindles being freely rotatable within their respective sleeves, and the sleeves being pivotally mounted relative to the housing so as to allow the permitted movement of the spindles.

Preferably bearings are provided between the interior of the sleeves and the exterior of at least part of the spindles.

A third aspect of the present invention provides an apparatus suitable for fitting a seal having a channel-shaped portion onto a flange which can vary in thickness along the length of the flange, which apparatus comprises:
a housing;
two rotatable spindles carried by the housing, with at least one of the spindles having (i) a first shaft rotatable about its own elongate axis, (ii) a second shaft rotatable about its own elongate axis, and (iii) a coupling means which allows the second shaft to be flexibly coupled to the first shaft in a manner such that rotation of the first shaft about its own axis causes rotation of the second shaft about its own axis, and such that the axis of the second shaft can adopt a non-rectilinear relationship with respect to the axis of the first shaft; and
means within the housing for causing rotation of the spindles;
wherein there is provision to allow the spacing between the spindles to increase in a plane in which the spindles lie, whilst preventing flexing of the spindles perpendicular to that plane;
wherein each spindle is surrounded by a sleeve, the spindles being freely rotatable within their respective sleeves, and at least one of the sleeves being pivotally mounted relative to the housing so as to allow the permitted movement of the spindles; and
wherein biasing means are present, tending to urge the sleeves, and hence the spindles, together.

Preferably one, more preferably both, of the spindles in the apparatus according to the third aspect of the present invention are spindles in accordance with the first aspect, with both sleeves being pivotally mounted relative to the housing.

Conveniently the biasing means comprises spring elements, such as spring washers.

For a better understanding of the present invention, and to show how the same may be carried into effect, reference will now be made, by way of example, to the accompanying drawings, in which:
Figure 1 is a front view of the lower part of an embodiment of a clinching apparatus in accordance with the present invention;
Figure 2 is a vertical section parallel to the front face of, and through the centre of, the clinching apparatus of Figure 1, and also as taken along the line II-II in Figure 3;
Figure 3 is a vertical section, taken along the line III-III in Figure 2, of certain components forming part of the apparatus of Figure 1;
Figure 4 is a horizontal section taken along the line IV-IV in Figure 2;
Figure 5 is a horizontal section taken along the line V-V in Figure 2;
Figure 6 is a horizontal section taken along the line VI-VI in Figure 3;
Figure 7 is a horizontal section, looking downwards, along the line VII-VII in Figure 3;
Figure 8 is a horizontal section taken along the line VIII-VIII in Figure 2;
Figure 9 is a horizontal section taken along the line IX-IX in Figure 1; and
Figure 10 is an inclined section taken along the line X-X in Figure 3.

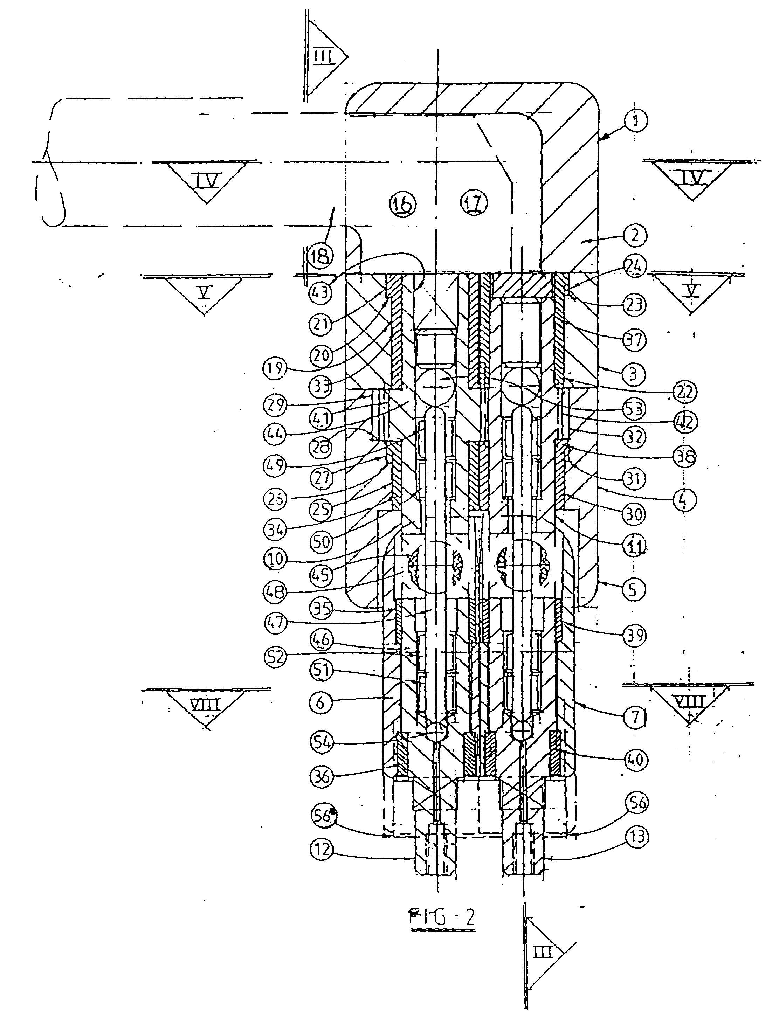

Referring principally to Figure 2, but also to the other Figures where appropriate, there is shown a clinching apparatus 1 which has an upper housing 2 below which is an intermediate housing 3, below which is a lower housing 4 having a downwardly projecting skirt 5.

Partially accommodated within the skirt 5 and projecting downwardly below the bottom of the skirt 5 are two sleeves, namely a left sleeve 6 and a right sleeve 7.

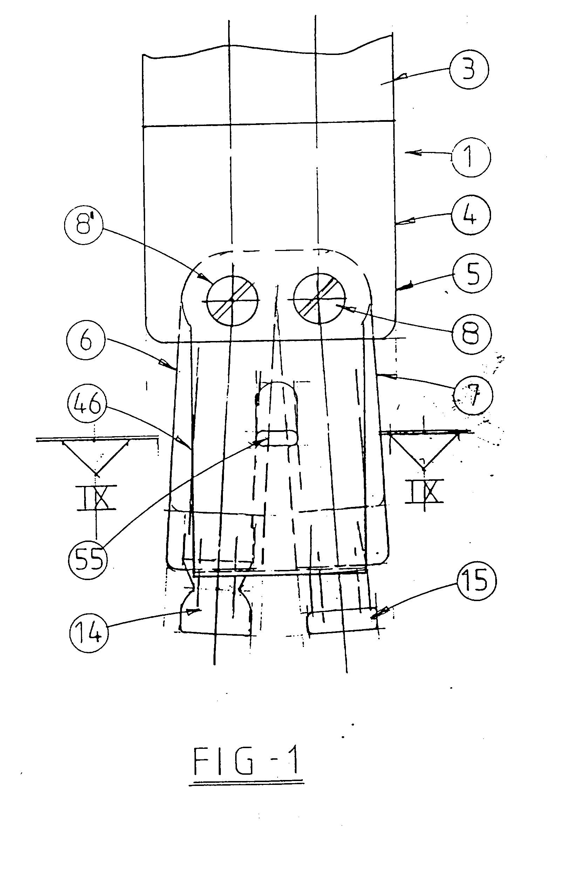

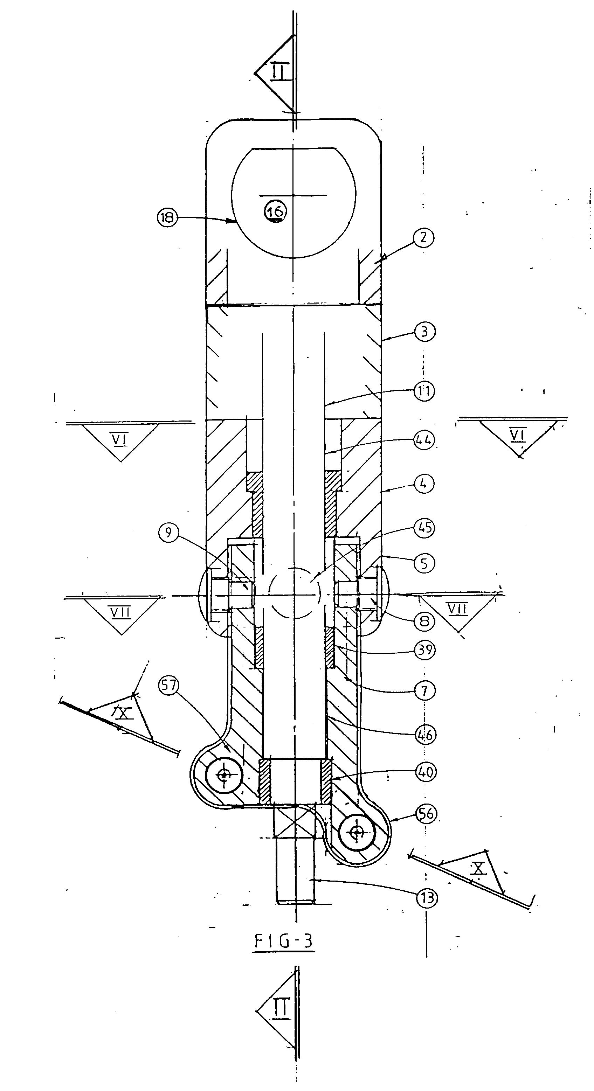

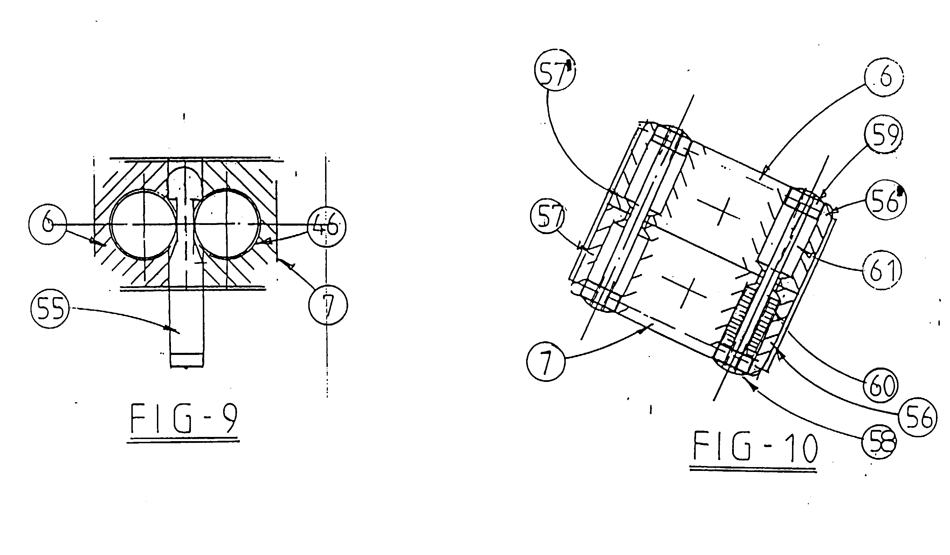

As most clearly shown in Figure 3, the right sleeve 7 is pivotally mounted with regard to the skirt 5 by pivots 8 and 9. Similarly, as shown in Figure 7, the left sleeve 6 is pivotally mounted with respect to the skirt 5 by corresponding pivots 8' and 9'. The arrangements of the pivots 8, 9 and 8' 9' is such to allow the sleeves 7 and 6 to undergo pivotal movement relative to each other, but only in a single vertical plane. In fact, with regard to the arrangement illustrated in Figures 1 and 2 the two sleeves 6 and 7 can only pivot in a plane corresponding to the plane of the paper.

Located generally parallel to each other in the apparatus 1 are left and right spindles 10 and 11 having respective feet 12 and 13 which project below the sleeves 6 and 7 and to which may be secured in a fixed manner respective rolls 14 and 15 (see Figure 1).

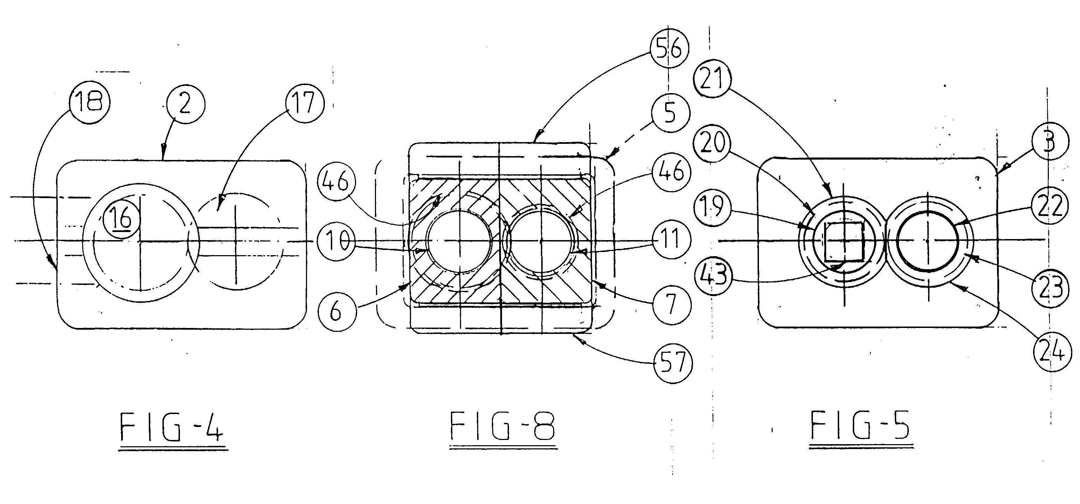

As seen in Figures 2 and 4 the upper housing 2 has a large chamber 16 which slightly overlaps with a smaller chamber 17, and there is an inlet 18 through which a power drive can enter the interior of the upper housing 2.

As best shown in Figures 2 and 5, there is in the intermediate housing 3 a left vertical bore 19 coaxial with the chamber 16 above, the bore 19 having near an upper end a step 20 leading to an expanded bore 21 opening onto the upper face of housing 3. Similarly, the intermediate housing 3 has a right vertical bore 22 coaxial with the chamber 17 above, the bore 22 having a step 23 leading to an expanded bore 24 opening onto the upper face of the housing 3. The bores 21 and 24 overlap slightly.

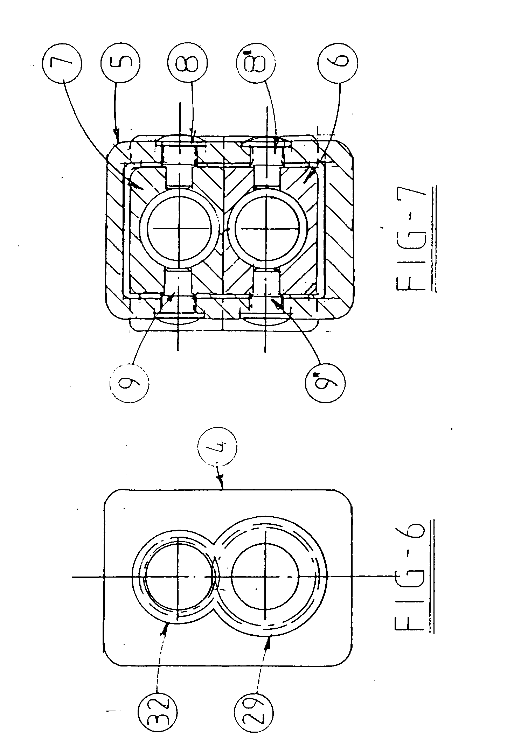

As seen in Figures 2 and 6, in the lower housing 4 above the skirt 5 is a left vertical bore 25 which at its upper end leads to a step 26 leading to a wider bore 27 leading upwards to another step 28 leading to a yet wider bore 29, the bores 25, 27 and 29 being coaxial with the bore 19. The lower housing 4 also has above the skirt 5 a right vertical bore 30 leading upwardly to a step 31 which leads to a wider bore 32, the bores 30 and 32 being coaxial with the bore 22 in housing 3. The bores 29 and 32 overlap, as best seen in Figure 6.

As will be appreciated there are left hand bores and right hand bores extending from the chambers 16 and 17 in housing 2 to the level of the skirt 5 in housing 4. In the left hand bores is located the left spindle 10, and in the right hand bores is located the right spindle 11.

The left spindle 10 is freely rotatably mounted within the left bores by bearings 33 and 34 provided in the intermediate and lower housings 3 and 4 and by upper and lower bearings 35 and 36 in the left sleeve 6.

The right spindle is freely rotatably mounted within the right bores by bearings 37 and 38 provided in the intermediate and lower housings 3 and 4 and by upper and lower bearings 39 and 40 in the right sleeve 7.

The spindle 10 has a gear wheel 41 engaged with a gear wheel 42 on the spindle 11. Power can be supplied through the inlet 18, in a conventional manner, to cause rotation of spindle 10 through a square hole 43, and rotation of the spindle 10 in one direction causes rotation of the spindle 11 in the opposite direction.

The two spindles 10 and 11 are nearly identical and only the left hand spindle 10 will be described in detail with reference to reference numerals. The spindle 10 has a hollow upper shaft 44 the lower end region of which cooperates via a universal coupling 45 to a hollow lower shaft 46, with a resiliently flexible member 47 in the form of a chrome vanadium rod being disposed axially within the spindle over an intermediate portion thereof. The upper shaft 44 is freely rotatably mounted within the bearings 33 and 34, and the lower shaft 46 is freely rotatable within the bearings 35 and 36.

In the illustrated embodiment the universal coupling 45 takes the form of intermeshed claws which are secured respectively to the lower end of the upper shaft 44 and the upper end of the lower shaft 46, the claws surrounding a ball 48, the arrangement being such that rotation of the upper shaft 44 necessarily causes corresponding rotation of the lower shaft 46 whilst permitting some limited degree of universal movement in the region of universal coupling 45.

In the illustrated arrangement the universal coupling 45 is separate from the upper and lower shafts 44 and 46, although it is secured to those components, but it is stressed that the coupling device, instead of being separately formed on the upper and lower shafts 44 and 46, could be integrally formed therewith.

The ball 48 has a bore passing through its centre, to allow the central region of the resiliently flexible member 47 to pass therethrough.

The resiliently flexible member 47 is mounted near its upper end region within an upper bearing 49 adjacent some packing 50, and near its lower end region within a lower bearing 51 adjacent some packing 52. Normally the upper and lower shafts 44 and 46 of each spindle 10 (or 11) are in a rectilinear relationship but if the lower end regions of the spindles 10 and 11 are forced apart, such as when a thicker than usual portion of flange is engaged, the two lower shafts 46 can pivot outwardly, whereas the two upper shafts 44 remain in parallel relationship to each other, this being permitted by virtue of the universal couplings 45. As the lower shafts 46 are mounted in the sleeves 6 and 7, the lower shafts 46 are only permitted to undergo the same pivotal movement as the sleeves 6 and 7 (already mentioned above), i.e. in a plane equivalent to the plane of the paper in Figures 1 and 2 and out of the plane of the paper in Figure 3. Any pivotal movement of the lower shafts 46 and associated movement of the sleeves 6 and 7 necessarily causes flexing of the resiliently flexible member 47 in each spindle 10 (or 11), the characteristic of the resiliently flexible member 47 tending to urge the upper and lower shafts 44 and 46 back into alignment.

In operation, the spindles 10 and 11 are caused to rotate through the drive and gearing arrangement (in a known manner if appropriate) and the lower shafts 46 can concomitantly undergo some pivotal movement, whilst the resiliently flexible members 47 tend to urge the lower shafts 46 back into a rectilinear relationship with the upper shafts 44.

The provision of the upper and lower bearings 49 and 51 for the resiliently flexible member 47 enables that member to flex in the manner described above, but without torsion being induced into the flexible members. If torsion were allowed to be induced, the combination of the flexing and the torsion would cause the resiliently flexible member 47 to heat and to undergo the risk of disintegration. Obviously there is provision within the spindle 10 (or 11) to locate the resiliently flexible member 47 at the appropriate place to prevent travel in the axial direction, for example the ball bearings 53 and 54.

In Figure 8, there are shown the sleeves 6 and 7 and in outline the skirt 5 which is in fact above the plane of the view. Also shown are the hollow lower shafts 46, but without the detail of the rods 47 and bearings 51.

To assist in the initial opening of the lower shafts 46 a key 55 can be provided as shown in Figures 1 and 9, which key, when rotated, causes the lower shafts 46 to be forced apart. To avoid confusion, the key is not shown in Figure 2.

As clearly shown in Figure 3, the sleeve 7 has at its lower end on one side a protuberance 56 which can serve as a foot or skate to help push a seal downwardly onto a flange. On the other side of the sleeve 7, is another protuberance 57. The other sleeve 6 is provided with similar protuberances 56' and 57' as best shown in Figure 10.

Two channels are provided in the side-by-side sleeves 6 and 7, passing through the protuberances 56 and 56' and through the protuberances 57 and 57'. In the first channel are a bolt 58 and nut 59 which secure two spring washers 60 and 61 in location in such a way as to urge the sleeves 6 and 7 together. A similar arrangement is present in the other channel.

When the lower shafts 46 are forced further apart than usual by a thicker than average piece of flange, the spring washer arrangement shown in Figure 10 urges the sleeves 6 and 7 back together, hence urging the lower shafts 46 of the spindles 10 and 11 back together, to ensure effective clinching. This clinching effect is achieved in the illustrated embodiment by the combination of (i) the resiliently flexible rods 47 and (ii) the spring washer arrangement of Figure 10, but it is to be appreciated that a satisfactory clinching effect could be achieved by (i) alone or by (ii) alone.

## Claims

1. Apparatus suitable for fitting a seal having a channel-shaped portion onto a flange which can vary in thickness along the length of the flange, which apparatus comprises:
a housing;
two rotatable spindles carried by the housing; and
means within the housing for causing rotation of the spindles:
wherein the apparatus has provision for the two spindles to move apart in the plane in which they are located.

2. An apparatus according to claim 1, wherein at least one spindle comprises:
a first shaft rotatable about its own elongate axis;
a second shaft rotatable about its own elongate axis;
a coupling means which allows the second shaft to be flexibly coupled to the first shaft in a manner such that rotation of the first shaft about its own axis causes rotation of the second shaft about its own axis, and such that the axis of the second shaft can adopt a non-rectilinear relationship with respect to the axis of the first shaft; and
an elongate resiliently flexible member capable of acting so as to tend to urge the axes of the first and second shafts to adopt a rectilinear configuration.

3. An apparatus according to claim 2, wherein in the or each spindle the elongate resiliently flexible member passes through the interior of the coupling means and has (i) a first end region located within a bore in the first shaft, and (ii) a second end region located within a bore within the second shaft.

4. An apparatus according to claim 3, wherein in the or each spindle first bearing means are provided between the first end region of the elongate resiliently flexible member and at least part of the wall of the first shaft that defines the bore of the first shaft, and wherein second bearing means are provided between the second end region of the resiliently flexible member and at least part of the wall of the second shaft that defines the bore in the second shaft.

5. An apparatus according to claim 2, 3 or 4, in which in the or each spindle the coupling means has a first part and a second part, with the first part being securable to an adjacent end region of the first shaft and with a second part being securable to the adjacent end region of the second shaft, there being provision for pivotal movement between the first and second parts, with rotation of the first part being capable of causing rotation of the second part.

6. An apparatus according to claim 5, wherein the first and second parts of the coupling means each have claws which intermesh and are located around a sphere.

7. An apparatus according to claim 6, wherein the sphere has an aperture through which the resiliently flexible member extends.

8. An apparatus as claimed in one of claims 2 to 7, wherein the elongate resiliently flexible member is a rod of chrome vanadium.

9. Apparatus according to any one of claims 2 to 8, wherein both spindles are as defined in any one of claims 2 to 8.

10. Apparatus according to any preceding claim, wherein there is provision to allow the spacing between the spindles to increase in a plane in which the spindles lie, whilst preventing flexing of the spindles perpendicular to that plane.

11. Apparatus according to claim 10, wherein each spindle is surrounded by a sleeve, the spindles being freely rotatable within their respective sleeves, and the sleeves being pivotally mounted relative to the housing so as to allow the permitted movement of the spindles.

12. Apparatus according to claim 11, wherein bearings are provided between the interior of the sleeves and the exterior of at least part of the spindles.

13. Apparatus suitable for fitting a seal having a channel-shaped portion onto a flange which can vary in thickness along the length of the flange, which apparatus comprises:
a housing;
two rotatable spindles carried by the housing, with at least one of the spindles having (i) a first shaft rotatable about its own elongate axis, (ii) a second shaft rotatable about its own elongate axis, and (iii) a coupling means which allows the second shaft to be flexibly coupled to the first shaft in a manner such that rotation of the first shaft about its own axis causes rotation of the second shaft about its own axis, and such that the axis of the second shaft can adopt a non-rectilinear relationship with respect to the axis of the first shaft; and
means within the housing for causing rotation of the spindles;
wherein there is provision to allow the spacing between the spindles to increase in a plane in which the spindles lie, whilst preventing flexing of the spindles perpendicular to that plane;
wherein each spindle is surrounded by a sleeve, the spindles being freely rotatable within their respective sleeves, and at least one of the sleeves being pivotally mounted relative to the housing so as to allow the permitted movement of the spindles; and
wherein biasing means are present, tending to urge the sleeves, and hence the spindles, together.

14. Apparatus according to Claim 13, wherein both spindles are as defined in Claim 13 and wherein both sleeves are pivotally mounted relative to the housing.

15. Apparatus according to claim 13 or 14, wherein bearings are provided between the interior of the sleeves and the exterior of at least part of the spindles.

16. Apparatus according to Claim 13, 14 or 15, wherein the biasing means comprise spring elements urging the sleeves together.

17. Apparatus according to Claim 16, wherein the spring elements are spring washers.

18. A spindle comprising:
a first shaft rotatable about its own elongate axis;
a second shaft rotatable about its own elongate axis;
a coupling means which allows the second shaft to be flexibly coupled to the first shaft in a manner such that rotation of the first shaft about its own axis causes rotation of the second shaft about its own axis, and such that the axis of the second shaft can adopt a non-rectilinear relationship with respect to the axis of the first shaft; and
an elongate resiliently flexible member capable of acting so as to tend to urge the axes of the first and second shafts to adopt a rectilinear configuration.
wherein the elongate resiliently flexible member passes through the interior of the coupling means and has (i) a first end region located within a bore in the first shaft, and (ii) a second end region located within a bore within the second shaft.

19. A spindle according to claim 18, having the characteristics defined in any one of claims 4 to 8.
